# DEMANDE DE BREVET EUROPEEN

(11) **EP 4 124 603 A1**
(43) Date de publication de la demande: **01.02.2023**
(21) Numéro de dépôt: 21306042.9
(22) Date de dépôt: 27.07.2021
(51) Int. Cl.: C02F 1/20, C02F 1/52

(54) **DISPOSITIF D'EXTRACTION DE NUTRIMENTS PHOSPHORE ET AZOTE CONTENUS DANS UN EFFLUENT LIQUIDE ET PROCÉDÉ D'EXTRACTION MIS EN OEUVRE DANS UN TEL DISPOSITIF**

(71) Demandeur: Syctom L'Agence Metropolitaine Des Dechets Menagers, 75013 Paris (FR); Syndicat Interdepartemental pour l'Assainissement de l'Agglomeration Parisienne, 75012 Paris (FR)
(72) Inventeur: MOREAU, Thomas, 78190 Trappes (FR); MAGIS, Alain, B - 4682 HOUTAIN SAINT SIMEON (BE); KREIM, Virginie, 68290 WEGSCHEID (FR); RIBEIRO, Thierry, 80250 AILLY SUR NOYE (FR); PAUSS, André, 60200 COMPIEGNE (FR); BILLETTE, Patrick, 92500 RUEIL MALMAISON (FR); ROUTHIER, Florian, 92000 NANTERRE (FR); BRUNET, Antoine, 92000 NANTERRE (FR)
(74) Mandataire: Plasseraud IP

(57) **Abrégé**

La présente invention se rapporte à un dispositif d'extraction de nutriments phosphore et azote contenus dans un effluent liquide, ledit effluent étant de préférence issu de la déshydratation d'un digestat d'un mélange d'une fraction organique des déchets ménagers, des boues et éventuellement de fumiers et de graisses, comprenant un premier réacteur comprenant un moyen d'extraction de CO2 ; un deuxième réacteur comprenant un réacteur à lit fluidisé ; un troisième réacteur comprenant un moyen d'extraction d'ammoniac et un laveur de gaz ; les premier, deuxième et troisième réacteurs étant agencés en série.

## Description

La présente invention appartient au domaine de l'extraction de nutriments, plus particulièrement de la valorisation d'effluents liquides générés dans le processus de la valorisation d'intrants organiques, en particulier et de préférence comprenant un mélange d'une fraction organique des déchets ménagers, des boues et éventuellement de fumiers et de graisses, notamment d'effluents issus de la déshydratation d'un digestat d'un mélange d'une fraction organique des déchets ménagers, des boues et éventuellement de fumiers et de graisses.

L'objet de la présente invention se rapporte à un dispositif d'extraction de nutriments phosphore et azote contenus dans un effluent liquide, ledit effluent étant de préférence issu de la déshydratation d'un digestat d'un mélange d'une fraction organique des déchets ménagers, des boues et éventuellement de fumiers et de graisses, comprenant un premier réacteur comprenant un moyen d'extraction de CO₂, de préférence une colonne à garnissage ou un réacteur à barbotage ; un deuxième réacteur comprenant un réacteur à lit fluidisé optionnellement surmonté d'un décanteur ; un troisième réacteur comprenant un moyen d'extraction d'ammoniac et un laveur de gaz ; les premier, deuxième et troisième réacteurs étant agencés en série.

L'objet de la présente invention se rapporte également à un procédé comprenant une étape d'extraction de CO₂, une étape d'extraction de phosphore et d'azote sous forme de struvite et une étape d'extraction d'azote sous forme de sel d'ammonium.

Des procédés et dispositifs d'extraction de nutriments existent. Il existe notamment des dispositifs de récupération de struvite seule dans du digestat brut par ajout d'un réactif magnésien. Il existe aussi des dispositifs de stripping de l'azote utiles en cas de présence de jus très concentrés et d'un gisement de chaleur inexploité.

Cependant les procédés connus ont des inconvénients, et nécessitent généralement une forte consommation de soude lors du traitement des jus de digestat, qui sont le plus souvent légèrement acides. Cette forte consommation de soude dans les procédés connus les rend peu économiques et entraîne des nuisances, notamment en ce qui concerne le transport des réactifs.

Il existe ainsi un besoin d'augmenter significativement les rendements des procédés d'extraction, tout en limitant la consommation de soude et ainsi rendre le procédé d'extraction plus rentable.

Il est du mérite de la Demanderesse d'avoir développé un nouveau dispositif et un nouveau procédé associé qui pallient les défauts et contraintes relevés dans les dispositifs et procédés connus.

L'invention se rapporte à un dispositif d'extraction de nutriments phosphore et azote contenus dans un effluent liquide, ledit effluent étant de préférence issu de la déshydratation d'un digestat d'un mélange d'une fraction organique des déchets ménagers, des boues et éventuellement de fumiers et de graisses, comprenant :
- un premier réacteur comprenant un moyen d'extraction de CO₂, de préférence une colonne à garnissage ou un réacteur à barbotage (également appelé bulleur) ;
- un deuxième réacteur comprenant un réacteur à lit fluidisé, de préférence surmonté d'un décanteur ;
- un troisième réacteur comprenant un moyen d'extraction d'ammoniac, comprenant de préférence au moins une colonne à garnissage ou au moins un réacteur à barbotage (ou bulleur) et un laveur de gaz ;
les premier, deuxième et troisième réacteurs étant agencés en série.

On entend par « nutriments », des éléments tels que de l'azote (N), du phosphore (P) et du potassium (K), utiles en agriculture, notamment à la réalisation d'amendements du sol.

On entend par «effluent liquide », un jus de déshydratation de matière organique, ou un jus de déshydratation de digestats de matière organique telle que de la FOR (Fraction Organique Résiduelle), boues, fumiers, graisses, etc., le jus de déshydratation de digestats pouvant être par exemple obtenu à l'issue d'un procédé de méthanisation (par exemple, un procédé de méthanisation bi-étagé). Il s'agit des jus (fraction liquide) récupérés en sortie de presse à vis à l'issue d'un procédé de méthanisation. Selon l'invention, l'effluent liquide est de préférence issu de la déshydratation d'un digestat d'un mélange d'une fraction organique des déchets ménagers, des boues et éventuellement de fumiers et de graisses.

Dans le cadre de la présente demande, on entend par « relié », une connexion directe ou indirecte entre deux éléments du dispositif.

Avantageusement, le premier réacteur comprend un moyen d'extraction de CO₂. Le moyen d'extraction de CO₂ est configuré pour extraire le CO₂ contenu dans l'effluent liquide. Le moyen d'extraction de CO₂ peut être une colonne à garnissage ou un réacteur à barbotage (ou bulleur). Il s'agit de préférence d'une colonne à garnissage. Il peut s'agir d'une colonne dite de « stripping » à garnissage.

Avantageusement, le premier réacteur peut comprendre une colonne à garnissage. De préférence, le premier réacteur est constitué d'une colonne à garnissage, d'une pompe, d'un filtre, l'instrumentation de suivi, la tuyauterie et d'un ensemble de vannes. Lorsque le premier réacteur comprend une pompe et un filtre, ces éléments sont positionnés en amont de l'entrée (de l'effluent liquide) de la colonne à garnissage.

On entend par « garnissage », un assemblage, en vrac ou structuré, qui permet d'augmenter la surface de contact entre une phase liquide et une phase gazeuse, améliorant ainsi les échanges entre les phases pour un volume de colonne donné. Le garnissage peut avoir une surface d'échange et un pourcentage de vide variables. Il peut ainsi être adapté aux performances et aux taux de MES (matières en suspension) en entrée de traitement. Le garnissage peut être un garnissage d'origine naturelle et/ou synthétique. Le garnissage est de préférence choisi dans le groupe comprenant les matériaux naturels minéraux, les matériaux synthétiques et un mélange de ceux-ci. Le garnissage peut par exemple être composé de polyéthylène haute densité (PEHD), de polypropylène haute densité (PPHD), de polyfluorure de vinylidène (PVDF), ou d'un mélange de ces matériaux.

On entend par «colonne à garnissage », un réacteur (généralement une colonne, ou cylindre de révolution) dans lequel on dispose du garnissage sur une hauteur définie et dans lequel on fait circuler à contre-courant deux fluides (l'effluent liquide et un gaz, i.e. de l'air). La colonne à garnissage peut aussi être appelée colonne de stripping à garnissage. La colonne à garnissage peut être sous forme d'un cylindre de révolution et peut avoir des dimensions variables, adaptées au volume d'effluent à traiter. La colonne peut être configurée de sorte que le ratio volumique des débits air et de liquide soit compris entre 50 et 500 (pour ce premier réacteur).

Avantageusement, le premier réacteur peut être muni d'une pompe, de préférence une pompe à rotor munie d'un variateur de fréquence. Le variateur de fréquence permet notamment d'adapter le dispositif au flux à traiter et donne de la souplesse au procédé mis en œuvre dans ledit dispositif par rapport à une installation à débit fixe. Cela permet notamment, l'amortissement pour le contrôle du niveau dans la partie inférieure du réacteur lorsque l'alimentation de ce même réacteur n'est pas elle-même stabilisée. Généralement, le débit nominal se situe au centre de la gamme de fonctionnement de la pompe. Le premier réacteur peut en outre être muni d'un filtre positionné en aval de la pompe à rotor et en amont de la colonne à garnissage. Le filtre peut être un filtre à décolmatage automatique. Le filtre a pour effet de limiter les quantités de matières en suspension (MES) envoyées dans la colonne à garnissage et pouvant, en cas de pic, lors des opérations de démarrage de la presse à vis, entraîner des dysfonctionnements sur la colonne à garnissage.

Avantageusement, le premier réacteur peut être muni en outre d'un décanteur. Le décanteur peut être en remplacement ou en complément du filtre, en amont. Le décanteur peut être utile en cas de trop forte concentration en MES (par exemple lorsque la concentration en MES est > 1g/L) et limiter le colmatage du filtre.

Avantageusement, le premier réacteur comprend au moins une entrée et au moins une sortie. Le premier réacteur peut comprendre une entrée et une sortie (pour la fraction liquide) et une entrée et une sortie (pour le gaz, i.e. l'air). Lorsque le premier réacteur comprend une colonne à garnissage, les entrées et sorties respectives sont configurées de sorte à permettre à l'effluent liquide et au gaz de circuler à contre-courant l'un par rapport à l'autre.

Avantageusement, le premier réacteur 10 peut comprendre une cuve tampon 100 (pour stocker l'effluent liquide) comprenant une entrée 105 et une sortie 106 (configurées pour la circulation de l'effluent liquide), une pompe 101 (pour acheminer l'effluent liquide dans la colonne à garnissage), un filtre 102, une colonne à garnissage 103 comprenant une entrée 107 et une sortie 108 (configurées pour la circulation de l'effluent liquide) et une entrée 109 et une sortie 110 (configurées pour la circulation du gaz), un ventilateur 104.

Avantageusement, le premier réacteur peut comprendre un réacteur à barbotage ou bulleur (en remplacement de la colonne à garnissage).

Avantageusement, le deuxième réacteur est un réacteur à lit fluidisé comprenant une partie inférieure et une partie supérieure. Le lit peut comprendre des particules de struvites en formation par cristallisation. Le réacteur à lit fluidisé peut avoir une hauteur allant de 1 à 5 m. La section du réacteur à lit fluidisé section peut être adaptée selon le débit de liquide à traiter. La partie supérieure du réacteur à lit fluidisé peut être surmontée d'un décanteur. La section du décanteur peut être d'un diamètre supérieur ou égal à celle du réacteur à lit fluidisé. Le décanteur peut être configuré de sorte à obtenir une vitesse ascensionnelle du liquide à traiter dans le lit fluidisé inférieure ou égale à 0,6 m/h (rapport débit d'alimentation / surface du réacteur).

Avantageusement, le deuxième réacteur peut en outre être muni d'un circuit de recirculation. Le circuit de recirculation peut être relié au décanteur et à la partie inférieure du réacteur à lit fluidisé. Le circuit de recirculation est configuré pour réinjecter dans la partie inférieure du réacteur les fines particules de struvite prélevées dans le décanteur et favoriser ainsi la croissance des cristaux dans le réacteur.

Avantageusement, le deuxième réacteur comprend au moins une entrée et au moins une sortie. L'entrée du deuxième réacteur est reliée à la sortie du premier réacteur.

Avantageusement, le deuxième réacteur 20 peut comprendre une pompe 200 (pour acheminer l'effluent A dans le réacteur à lit fluidisé), un réacteur à lit fluidisé 201, surmonté d'un décanteur 202, une entrée 203 et une sortie 204 (configurées pour la circulation de l'effluent A), une sortie 205 (configurées pour extraire la struvite du réacteur), un circuit de recirculation 206.

Avantageusement, le troisième réacteur est un ensemble d'éléments et peut comprendre un moyen d'extraction d'ammoniac et un laveur de gaz.

Avantageusement, le troisième réacteur comprend un moyen d'extraction d'ammoniac. Le moyen d'extraction d'ammoniac est configuré pour extraire l'ammoniac contenu dans l'effluent B. Le moyen d'extraction d'ammoniac peut être au moins une colonne à garnissage ou au moins un réacteur à barbotage ou un bulleur, de préférence le moyen d'extraction est au moins une colonne à garnissage.

Avantageusement, le troisième réacteur peut comprendre au moins une, de préférence au moins deux colonnes à garnissage et un laveur de gaz. Les éléments (colonne(s) et laveur) sont agencés en série, du point de vue du gaz circulant, l'effluent B ne circulant pas dans le laveur de gaz. Le garnissage peut être un garnissage d'origine naturelle et/ou synthétique. Le garnissage est de préférence choisi dans le groupe comprenant les matériaux naturels minéraux, les matériaux synthétiques et un mélange de ceux-ci. Le garnissage peut par exemple être composé de polyéthylène haute densité (PEHD), de polypropylène haute densité (PPHD), de polyfluorure de vinylidène (PVDF), ou d'un mélange de ces matériaux. Lorsqu'il y en a plusieurs, les colonnes à garnissage du troisième réacteur peuvent être identiques ou différentes. Chacune desdites colonnes peut se présenter sous forme d'un cylindre de révolution et peut avoir des dimensions variables. Dans le troisième réacteur, la ou les colonne(s) à garnissage est(sont) dimensionnée(s) de sorte à permettre un ratio volumique gaz / liquide compris dans un intervalle allant de 500 à 5000.

Avantageusement, le troisième réacteur peut être muni d'une pompe de transfert. De préférence, la pompe est une pompe centrifuge sur variation de fréquence. La pompe de transfert est configurée pour permettre la recirculation du fluide du bas de la colonne vers le haut de la colonne de sorte à le répartir sur le garnissage.

Avantageusement, le laveur de gaz est configuré pour assurer un taux d'élimination adéquate, conformément aux règles de l'art. Le laveur de gaz est configuré pour autoriser une vitesse du gaz, dans le laveur, inférieure ou égale à 3 m/s. Le laveur de gaz peut comprendre une colonne à garnissage ou un bulleur (ou barboteur).

Avantageusement, le troisième réacteur peut comprendre en outre une cuve infiniment mélangée. De préférence, la cuve est positionnée en amont du moyen d'extraction d'ammoniac, de préférence de la ou des colonnes à garnissage, par rapport au sens de circulation prévu pour l'effluent. La cuve infiniment mélangée peut être de polyéthylène haute densité (PEHD), de polypropylène haute densité (PPHD), de polyfluorure de vinylidène (PVDF), ou d'un mélange de ces matériaux. Cette cuve peut en outre servir de cuve tampon, afin de permettre la régulation du liquide dans la ou les colonnes à garnissage.

Avantageusement, le troisième réacteur peut comprendre en outre un moyen de régulation de la température. Il peut s'agir d'un échangeur à plaques. La régulation de la température peut par exemple être réalisée par la recirculation du liquide contenu dans la cuve tampon dans un échangeur à plaques. Cet échangeur peut être raccordé à un réseau d'eau chaude.

Avantageusement, le troisième réacteur comprend au moins une entrée et au moins une sortie. Le troisième réacteur peut comprendre une entrée et une sortie (pour la fraction liquide) et une entrée et une sortie (pour le gaz, i.e. l'air). L'entrée du troisième réacteur est reliée à la sortie du deuxième réacteur. De préférence, le troisième réacteur est un ensemble d'éléments et peut comprendre une cuve, au moins deux colonnes à garnissage et un laveur de gaz, agencés en série (du point de vue du gaz circulant, l'effluent B ne circulant pas dans le laveur de gaz).

Avantageusement, le troisième réacteur 30 peut comprendre une pompe 301 (pour acheminer l'effluent B dans la première colonne à garnissage), une première colonne à garnissage 302 comprenant une entrée 310 et une sortie 311 (configurées pour la circulation de l'effluent B), une entrée 312 et une sortie 313 (configurées pour la circulation du gaz), une pompe 303 (pour acheminer l'effluent B dans la deuxième colonne à garnissage), une deuxième colonne à garnissage 304 comprenant une entrée 314 et une sortie 315 (configurées pour la circulation de l'effluent B), une entrée 316 et une sortie 317 (configurées pour la circulation du gaz), une pompe 305 (pour extraire le liquide enrichi en sels d'ammonium du laveur), un laveur de gaz 306 comprenant une entrée 318 et une sortie 319 (configurées pour la circulation du gaz), une entrée 320 et une sortie 321 (configurées respectivement pour l'introduction du liquide destiné à être enrichi en sels d'ammonium et l'évacuation du liquide enrichi en sels d'ammonium), une cuve de stockage 322 (pour stocker le liquide enrichi en sels d'ammonium), une pompe 307, un réacteur infiniment mélangé 308 comprenant un agitateur mécanique 323, un système de régulation de température 325 et une entrée 326 et une sortie 327 (configurées pour la circulation de l'effluent B), un filtre 309 et un ventilateur 324.

L'invention se rapporte également à un procédé d'extraction de nutriments phosphore et azote contenus dans un effluent liquide, ledit effluent étant de préférence issu de la déshydratation d'un digestat d'un mélange d'une fraction organique des déchets ménagers, des boues et éventuellement de fumiers et de graisses, comprenant les étapes :
a) introduction de l'effluent liquide dans un premier réacteur comprenant un moyen d'extraction de CO₂, de préférence une colonne à garnissage ou un réacteur à barbotage ;
b) extraction de CO₂ de l'effluent liquide dans le premier réacteur, de manière à obtenir un effluent A ;
c) introduction de l'effluent A obtenu à l'étape b) dans un deuxième réacteur comprenant un réacteur à lit fluidisé optionnellement surmonté d'un décanteur ;
d) extraction de phosphore et d'azote de l'effluent A introduit dans le deuxième réacteur à l'étape c), de manière à obtenir un effluent B et de la struvite ;
e) introduction de l'effluent B obtenu à l'étape d) dans un troisième réacteur comprenant un moyen d'extraction d'ammoniac, comprenant de préférence au moins une colonne à garnissage ou au moins un réacteur à barbotage et un laveur de gaz ;
f) extraction de l'azote, sous forme de sel d'ammonium, de l'effluent B introduit dans le troisième réacteur à l'étape e), de manière à obtenir un effluent C et un sel d'ammonium.

Avantageusement, le procédé selon l'invention comprend une étape a) d'introduction de l'effluent liquide dans un premier réacteur comprenant un moyen d'extraction de CO₂, de préférence une colonne à garnissage ou un réacteur à barbotage. L'étape a) du procédé selon l'invention peut être mise en œuvre au moyen d'une pompe. L'étape a) peut comprendre une sous-étape de filtration de l'effluent liquide avant son introduction dans la colonne à garnissage.

Avantageusement, le procédé selon l'invention comprend une étape b) d'extraction de CO₂ de l'effluent liquide dans le premier réacteur, de manière à obtenir un effluent A. De préférence, à l'étape b), l'effluent liquide circule à contre-courant d'un flux d'air dans la colonne à garnissage. Le flux d'air peut être une aération naturelle ou forcée. Le flux d'air peut avoir un débit volumique compris dans un intervalle allant de 50 à 500 fois le débit de l'effluent liquide. L'air peut être à température ambiante, c'est-à-dire de 5 à 35 °C. L'extraction du CO₂ de l'étape b) est ainsi réalisée par « stripping », c'est-à-dire via des transferts de masse lors d'échanges liquide-gaz dans la colonne à garnissage entre l'effluent liquide et le flux d'air, en augmentant la surface de transfert. La teneur en CO₂ de l'effluent liquide (qui est riche en CO₂ dissous) diminue lors de l'étape jusqu'à atteindre un équilibre avec celui de l'air extérieur (i.e. l'air utilisé pour le stripping).

On définit un ratio volumique (v/v) air/effluent liquide. Avantageusement, le ratio volumique (v/v) air/effluent liquide de l'étape b) peut être compris dans un intervalle allant de 50 à 500.

Avantageusement, l'effluent A obtenu à l'étape b) est appauvri en CO₂. L'effluent A contient généralement 90 % (massique) de CO₂ en moins par rapport à l'effluent liquide.

Avantageusement, le procédé selon l'invention comprend une étape c) d'introduction de l'effluent A obtenu à l'étape b) dans un deuxième réacteur comprenant un réacteur à lit fluidisé optionnellement surmonté d'un décanteur. L'étape c) du procédé selon l'invention peut être mise en œuvre au moyen d'une pompe. L'étape c) peut comprendre une sous-étape de filtration de l'effluent liquide avant son introduction dans le réacteur à lit fluidisé.

Avantageusement, le procédé selon l'invention comprend une étape d) d'extraction de phosphore et d'azote de l'effluent A introduit dans le deuxième réacteur à l'étape c), de manière à obtenir un effluent B et de la struvite. L'extraction de phosphore et d'azote est généralement réalisée par précipitation (i.e. sous forme de struvite) dans le réacteur à lit fluidisé. Typiquement, la struvite est précipitée de manière contrôlée et continue dans le deuxième réacteur à de l'effluent A via l'ajout d'une source de magnésium. De préférence, l'étape d) comprend l'addition d'une source de magnésium. La source de magnésium peut être un sel de magnésium. Le sel de magnésium peut être choisi dans le groupe comprenant Mg(OH)₂ et MgCl₂, de préférence Mg(OH)₂. L'étape d) peut comprendre en outre une sous-étape d'ajout de MgO, afin d'amorcer la cristallisation de la struvite. L'étape d) peut comprendre en outre une sous-étape de recirculation de struvite depuis le décanteur vers la partie inférieure du réacteur à lit fluidisé. Cette sous-étape de recirculation peut permettre d'optimiser le rendement de l'étape d).

Avantageusement, l'étape d) peut comprendre une sous-étape de contrôle du pH (avant ou après l'introduction de la source de magnésium), et lorsque le pH mesuré est inférieur ou égal à 8, d'ajustement du pH. Par exemple, le pH est ajusté à une valeur supérieure ou égale à 8, si celui-ci est toujours inférieur à 8 après l'addition de la source de magnésium.

Avantageusement, le procédé selon l'invention comprend une étape e) d'introduction de l'effluent B obtenu à l'étape d) dans un troisième réacteur comprenant un moyen d'extraction d'ammoniac, comprenant de préférence au moins une colonne à garnissage ou au moins un réacteur à barbotage (ou bulleur) et un laveur de gaz, agencés en série. L'étape e) du procédé selon l'invention peut être mise en œuvre au moyen d'une pompe. L'étape e) peut comprendre une sous-étape de filtration de l'effluent B avant son introduction dans le troisième réacteur.

Avantageusement, le procédé selon l'invention comprend une étape f) d'extraction de l'azote, sous forme de sel d'ammonium, de l'effluent B introduit dans le troisième réacteur à l'étape e), de manière à obtenir un effluent C et un sel d'ammonium. Typiquement, une circulation d'air (de préférence une boucle d'air en circuit fermé) traverse successivement les colonnes avant de circuler dans le laveur de gaz. L'étape f) permet ainsi un transfert de l'azote de la phase liquide (l'effluent traité lors des étapes précédentes) à la phase gazeuse (boucle d'air en circuit fermé). À la sortie des colonnes à garnissage, on obtient un effluent C (liquide) ayant une faible concentration en azote. L'effluent C peut ensuite être transféré vers une station d'épuration. On obtient également une phase gazeuse enrichie en ammoniac qui est ensuite traitée par le laveur de gaz situé en aval (dans le sens de circulation du gaz) des colonnes à garnissage, pour obtenir le sel d'ammonium.

Avantageusement, l'étape f) peut comprendre les sous-étapes :
i) extraction de l'azote sous forme d'ammoniac gazeux, de manière à obtenir un gaz A comprenant de l'ammoniac ;
ii) absorption de l'ammoniac du gaz A obtenu à l'étape i) avec une solution diluée ou non diluée d'un acide fort, de manière à obtenir une solution de sel d'ammonium.

Avantageusement, le procédé selon l'invention permet d'obtenir une solution en sel d'ammonium est suffisamment concentrée pour être revalorisée en respectant les normes applicables.

Avantageusement, l'étape i) d'extraction est réalisée au moyen de la circulation de l'effluent B, à contre-courant d'un flux d'air, successivement dans les au moins deux colonnes à garnissage agencées en série du troisième réacteur, de manière à obtenir le gaz A.

On définit un ratio volumique (v/v) air/effluent B. Avantageusement, le ratio volumique (v/v) air/effluent B de l'étape i) peut être compris dans un intervalle allant de 500 à 5000.

Avantageusement, l'étape i) peut comprendre une sous-étape d'ajustement du pH (dans une cuve infiniment mélangée). L'étape d'ajustement est optionnelle et n'est généralement mise en œuvre que lorsque la valeur du pH de l'effluent B est inférieure à 10. L'étape i) d'extraction de l'azote sous forme d'ammoniac gazeux peut comprendre les sous-étapes ordonnées suivantes :
- mesure du pH de l'effluent B ;
- optionnellement, ajustement du pH de l'effluent B à une valeur allant de 10 à 11, lorsque la valeur mesurée à l'étape précédente est inférieure à 10 ;
- ajustement de la température de l'effluent B à une température supérieure ou égale à 30°C, de préférence supérieure ou égale à 50°C ou supérieure ou égale à 65°C ;
- circulation de l'effluent B, à contre-courant d'un flux d'air, successivement dans au moins deux colonnes à garnissage, agencées en série, de manière à obtenir le gaz A.

Avantageusement, la mesure du pH peut être réalisée par tout moyen classique de mesure du pH. L'homme du métier sera en mesure de choisir la méthode de mesure du pH adaptée à chaque effluent. De préférence, le pH est mesuré par électrode. Le pH peut être ajusté par ajout de soude ou de toute autre base forte.

Avantageusement, l'ajustement de la température peut être réalisé par tout moyen classique de transfert de calories. L'homme du métier sera en mesure de choisir la méthode de régulation de la température adaptée à chaque effluent. De préférence, l'ajustement de la température est réalisé via le moyen de régulation de la température du troisième réacteur.

Avantageusement, l'étape ii) est réalisée dans le laveur de gaz. Le lavage du gaz permet le transfert de l'azote présent en phase gazeuse (gaz A) vers une phase liquide, concentrée, et ensuite sa transformation en sel d'ammonium. Le lavage du gaz est effectué en milieu acide par recirculation d'une solution acide aqueuse comprenant un acide fort. L'acide fort peut être choisi dans le groupe comprenant l'acide sulfurique, l'acide nitrique et l'acide phosphorique. De préférence, les acides sont sous forme commerciale à concentration élevée. Le produit obtenu est un produit valorisable et la voie de valorisation produit est maîtrisée et connue par l'homme du métier.

L'invention présente les avantages suivants, non limitatifs :
- La mise en place d'une étape de traitement du filtrat par stripping du CO₂ en amont de l'étape de stripping azote permet une économie substantielle de soude pour atteindre le pH optimal du procédé.
- Les rendements d'abattement de la charge azotée sont élevés, et peuvent atteindre plus de 99 % dans des conditions idéales de circulation d'air et de température.

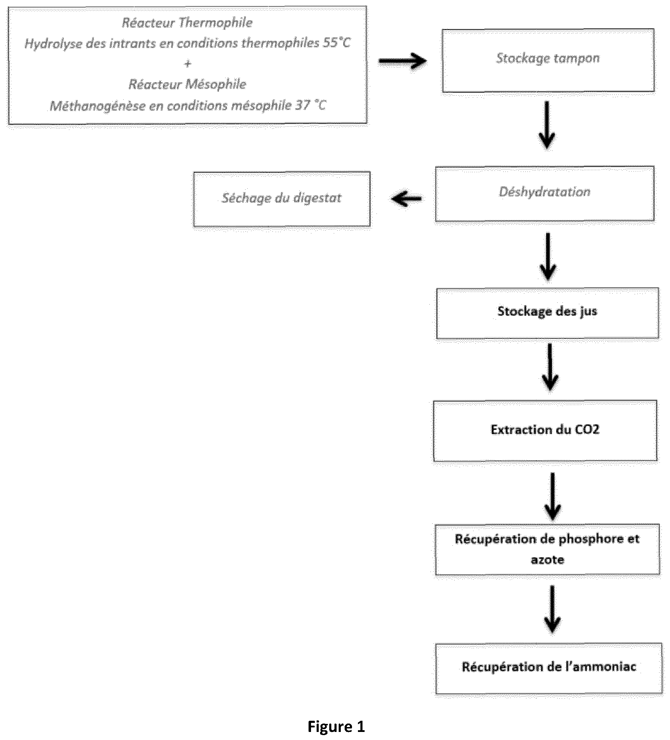

La figure 1 représente un exemple de schéma fonctionnel de mise en œuvre du procédé et l'enchaînement logiquement des étapes a) à f).

La figure 2 représente un dispositif 1 selon l'invention comprenant :
- un premier réacteur 10 comprenant une cuve tampon 100 (pour stocker l'effluent liquide) comprenant une entrée 105 et une sortie 106 (configurées pour la circulation de l'effluent liquide), une pompe 101 (pour acheminer l'effluent liquide dans la colonne à garnissage), un filtre 102, une colonne à garnissage 103 comprenant une entrée 107 et une sortie 108 (configurées pour la circulation de l'effluent liquide) et une entrée 109 et une sortie 110 (configurées pour la circulation du gaz), un ventilateur 104 ;
- un deuxième réacteur 20 comprenant une pompe 200 (pour acheminer l'effluent A dans le réacteur à lit fluidisé), un réacteur à lit fluidisé 201, surmonté d'un décanteur 202, une entrée 203 et une sortie 204 (configurées pour la circulation de l'effluent A), une sortie 205 (configurées pour extraire la struvite du réacteur), un circuit de recirculation 206 ;
- troisième réacteur 30 comprenant une pompe 301 (pour acheminer l'effluent B dans la première colonne à garnissage), une première colonne à garnissage 302 comprenant une entrée 310 et une sortie 311 (configurées pour la circulation de l'effluent B), une entrée 312 et une sortie 313 (configurées pour la circulation du gaz), une pompe 303 (pour acheminer l'effluent B dans la deuxième colonne à garnissage), une deuxième colonne à garnissage 304 comprenant une entrée 314 et une sortie 315 (configurées pour la circulation de l'effluent B), une entrée 316 et une sortie 317 (configurées pour la circulation du gaz), une pompe 305 (pour extraire le liquide enrichi en sels d'ammonium du laveur), un laveur de gaz 306 comprenant une entrée 318 et une sortie 319 (configurées pour la circulation du gaz), une entrée 320 et une sortie 321 (configurées respectivement pour l'introduction du liquide destiné à être enrichi en sels d'ammonium et l'évacuation du liquide enrichi en sels d'ammonium), une cuve de stockage 322 (pour stocker le liquide enrichi en sels d'ammonium), une pompe 307, un réacteur infiniment mélangé 308 comprenant un agitateur mécanique 323, un système de régulation de température 325 et une entrée 326 et une sortie 327 (configurées pour la circulation de l'effluent B), un filtre 309 et un ventilateur 324.

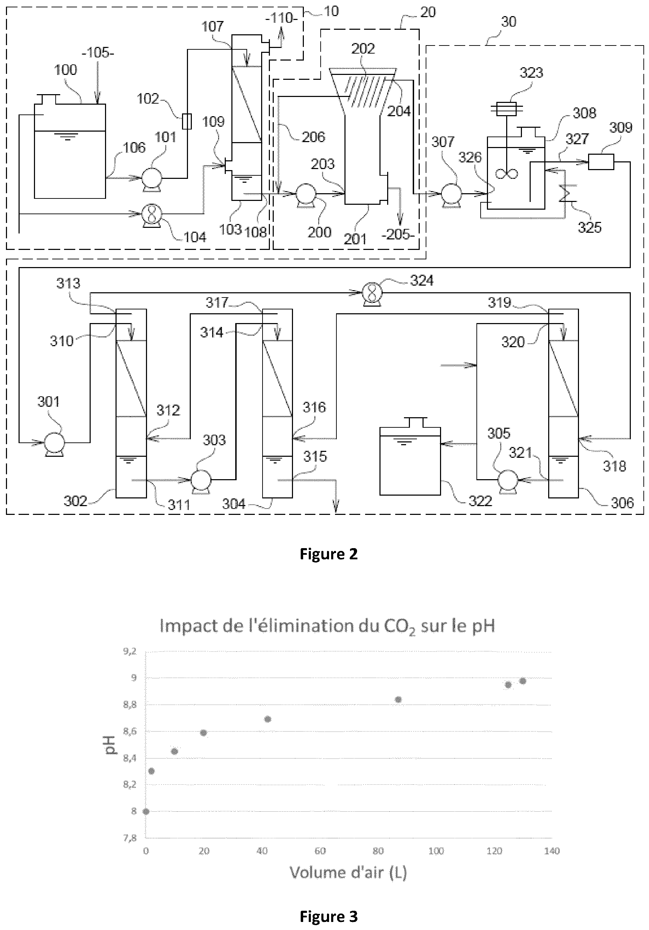

La figure 3 représente l'évolution du pH de l'effluent en fonction de la quantité d'air ayant circulé à travers le premier réacteur.

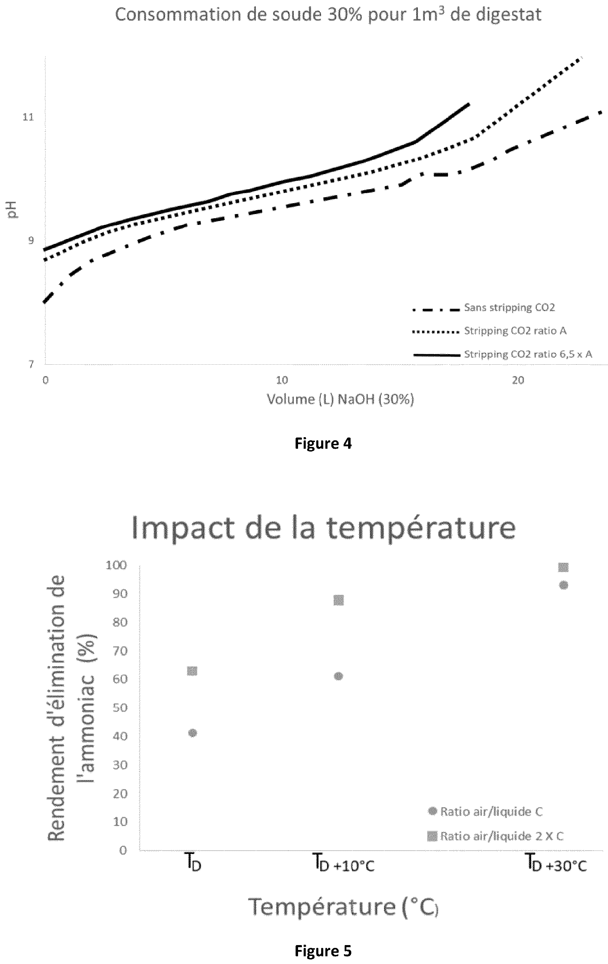

La figure 4 représente l'évolution du pH dans le premier réacteur en fonction du volume de soude ajoutée pour :
- un effluent liquide sans stripping (· - · - · -),
- un effluent liquide avec stripping et un ratio air/liquide A compris entre 50 et 500 (···········),
- un effluent liquide avec stripping et un ratio air/liquide A x 6,5 (-).

La figure 5 représente l'évolution du rendement d'extraction de l'ammoniac en fonction de la température, dans le troisième réacteur, pour un ratio air/liquide C compris entre 500 et 2500 (●) et un ratio air/liquide 2 x C (■).

L'invention sera mieux comprise à la lecture des exemples, non limitatifs, qui suivent.

### Exemple 1 : dispositif selon l'invention.

Un dispositif selon l'invention est représenté sur la figure 2.

### Exemple 2 : mise en œuvre du procédé selon l'invention.

### A. Matériel et méthode

L'effluent liquide est un jus (fraction liquide) récupéré en sortie de presse à vis à l'issue d'un procédé de méthanisation. L'effluent en entrée de méthanisation était constitué des éléments suivants :
- 80 % de fraction organique de déchets ménagers (fraction 0 à 10 mm criblée) ;
- 20 % de boues biologiques non digérées ;

L'effluent liquide est un filtrat de 600 ml, à pH 8 avec un teneur en matière sèche de 0,45%. Le filtrat est filtré sur tamis d'une maille de 500 µm pour avoir une teneur en matière en suspension (MES) < 1 gMES/L.

Le dispositif utilisé pour la mise en œuvre de cet exemple est un dispositif selon l'invention modélisé en laboratoire, aux dimensions réduites.

Le premier réacteur comporte un bulleur d'un volume de 1 L et comprend 600 mL d'effluent liquide et un débit d'air inférieur à 5 L/min le traverse.

Le second réacteur comprend un réacteur à lit fluidisé (Bêcher agité) de dimensions 1 L et comprend 500 ml d'effluent A.

Le troisième réacteur comprend un bulleur de dimensions 1 L contenant 250 ml d'effluent B avec un débit d'air traversant inférieur à 3 L/min, et un laveur de gaz constitué d'un bulleur de dimension IL et contenant 250 ml d'une solution d'acide sulfurique à pH < 3.

### Extraction de CO₂ de l'effluent liquide dans le premier réacteur (étapes a) et b) du procédé selon l'invention)

Afin d'éliminer le CO₂ présent dans le l'effluent liquide, un système de barbotage en circuit ouvert est mis en place dans le premier réacteur.

600 ml d'effluent liquide sont préalablement filtrés sur tamis d'une maille de 500 µm pour avoir une teneur en matière en suspension (MES) < 1 gMES/L.

Puis, ils sont introduits dans le premier réacteur. Un flux d'air est bullé dans le réacteur. Le débit moyen d'air traversant le barboteur est inférieur à 5 L/min. La durée de l'extraction est supérieure à 30 minutes. Les mesures de pH sont effectuées en parallèle avec un pH-mètre au cours du temps afin de suivre l'évolution du pH en fonction de l'élimination du CO₂.

On obtient un effluent A, appauvri en CO₂. Le pH de l'effluent A est égal à 9, et a augmenté d'une unité grâce à cette étape (voir B. Résultats).

### Extraction de phosphore et d'azote (sous forme de struvite) de l'effluent A (étapes c) et d) du procédé selon l'invention)

L'effluent A a été caractérisé afin de déterminer sa concentration initiale en phosphate, ammonium et magnésium. Suite à l'analyse physico-chimique de l'effluent A, les quantités de réactif à ajouter ont été calculées en fonction des ratios massiques Mg/P désirés.

Un volume d'effluent A de 500 mL est introduit dans le second réacteur. Le réactif Mg(OH)2 est ajouté à l'effluent A afin d'obtenir un ratio Mg/P de 1,4 , puis le mélange est mis sous agitation.

Le pH est ajusté à une valeur d'environ 8,2 par ajout d'une solution de soude concentrée à 32% (massique).

Le mélange est mis sous agitation pendant une durée supérieure à 4 heures (afin de simuler le lit fluidisé). Le milieu réactionnel est ensuite laissé au repos pendant une durée supérieure à 12 heures (afin de simuler l'action du décanteur).

Une analyse ionique par Dionex est ensuite effectuée sur le surnageant afin de déterminer le bilan matière en fin de réaction et de calculer le rendement de précipitation du phosphore et de l'azote.

On obtient un effluent B, et de la struvite.

Le rendement en struvite est de 26% (par rapport à la concentration massique totale en éléments P et N de l'effluent A).

### Extraction de l'azote (sous forme de sel d'ammonium) de l'effluent B (étape e) et f) du procédé selon l'invention)

L'effluent B à pH 8,2 est introduit dans le troisième réacteur.

Le pH de l'effluent B est ajusté in situ dans le réacteur à 10 pH à l'aide de soude à 30% massique.

Le barbotage en circuit fermé consiste à effectuer des essais de barbotage pour simuler le stripping à l'air en circuit fermé, dans le but de définir les rendements atteignables et les paramètres tels que le pH, la température et les ratios volumiques air/liquide.

Pour cela, il s'agit d'effectuer des essais en mettant en série et en boucle fermée en air :
- Un barboteur de 1 L contenant 250 ml le filtrat à stripper ;
- Un barboteur de 1 L contenant 250 ml de l'acide sulfurique en excès (pH < 3) ;
- Une pompe pour la circulation de l'air à un débit inférieure à 3 L/min ;
- Les deux barboteurs sont placés dans un bain marie afin de maintenir une température constante et maîtrisée D comprise entre 30 et 50 °C. On obtient un effluent C et du sulfate d'ammonium avec un abattement supérieur à 60%

### B. Résultats

### Extraction du CO2

Afin de déterminer l'impact de l'extraction du CO₂ sur l'effet tampon de l'effluent liquide, des titrations ont été effectuées après différents temps de barbotage lors de la mise en œuvre de l'étape b).

Des prélèvements liquides de 50 mL sont effectués afin de définir l'impact de l'élimination du CO₂ sur la consommation de soude.

Un dosage pH-métrique des échantillons est effectué. L'évolution du pH et de la température de l'échantillon au cours de l'étape b) est renseignée sur la figure 3.

La mise en œuvre de l'étape b) du procédé a permis de gagner une unité pH sur l'effluent A, dont le pH est de 9 (par rapport à l'effluent liquide, dont le pH n'était que de 8.

Cette augmentation de pH va permettre une économie significative de soude dans les étapes ultérieures d) et f).

### Détermination de l'impact du CO₂ sur l'effet tampon de l'effluent liquide.

Les résultats présentés sur la figure 4 présentent l'évolution du pH de l'effluent liquide en fonction du volume de soude titré pour trois échantillons ayant subi un temps de barbotage différent. Les résultats présentés sur la figure montrent que l'augmentation du temps de barbotage du filtrat entraîne une diminution de la consommation de soude pour un pH cible.

La figure 4 représente les résultats obtenus sur le stripping de CO₂ dans le cadre de cet essai, pour un ratio volumique air/liquide R_{A} compris entre 50 et 500.

Dans le tableau 1 ci-dessous, on compare les gains en pourcentages volumiques lors de la mise en œuvre du procédé sans extraction de CO₂, et avec extraction avec un ratio R_{A} ou un ratio de 6,5 x R_{A}:

**Tableau 1 : comparatif sans stripping (extraction), avec ratio R_{A} et ratio 6,5 x R_{A}.**

| | Sans stripping de CO₂ | Ratio R_{A} | | Ratio 6,5 x R_{A} | |
|---|---|---|---|---|---|
| pH cible | Conso. (L/m³⁾ | Conso. (L/m³⁾ | Gain % | Conso. (L/m³⁾ | Gain% |
| 9 | 4 | 2,5 | 37% | 1 | 75% |
| 11 | 24 | 19 | 21% | 17 | 29% |

Ces résultats montrent que l'étape b) du procédé permet une économie substantielle en réactif (soude) en vue d'atteindre un pH optimal pour les étapes subséquentes d'extraction de phosphore et d'azote (sous forme de struvite et d'ammonium).

### Influence de la température et du ratio air/liquide sur la capacité d'élimination de l'ammonium

Dans cet exemple, on a comparé l'efficacité d'extraction (étape f) du procédé selon l'invention de l'ammoniac sur l'effluent B.

Pour les essais, lorsque le pH a été rehaussé, il avait une cible pH_{B} égal à 10

Le ratio volumique air/liquide R_{C} est quant à lui compris entre 500 et 2500.

La figure 5 montre l'impact de la température qui a été étudiée en fixant le premier point à une température T_{D} comprise entre 30 et 50°C, le point suivant correspond à T_{D} +10°C et le dernier à T_{D} +30°C.

La figure 5 montre également que lors des études des facteurs température et ratios air/liquide, il y a 2 courbes correspondant à des ratios air/liquide différents. Dans les deux cas la courbe ■ dont le ratio air/liquide est 2 fois supérieur au ratio air/liquide de la courbe ●, se situe au-dessus de la courbe ●.

Ceci confirme l'importance de ce facteur sur le rendement d'élimination de l'ammoniac.

En plus de l'impact positif de l'étape b) d'extraction de CO₂, les paramètres de ratio air/liquide et température permettent d'améliorer le procédé.

Plus la température du traitement augmente, plus le rendement du procédé augmente, quel que soit le ratio air/liquide. On observe cependant qu'un pH plus élevé permet l'atteinte de meilleurs rendements d'abattement de l'ammonium, mais nécessite aussi une plus grande consommation de soude.

Enfin, pour de mêmes conditions de pH et de température, plus le ratio air/liquide augmente, plus le rendement d'abattement atteint est important.

L'ensemble de ces résultats obtenus mettent en avant différents points. L'élimination du CO₂ est un réel avantage pour la réduction les dépenses d'exploitation du procédé d'extraction de nutriments, notamment par la forte réduction de la consommation de soude. Ces résultats ont permis de démontrer un gain de plus de 30 % de la consommation de soude entre un effluent traité selon le procédé de l'invention et un effluent traité de manière traditionnelle. Il est possible d'atteindre expérimentalement des rendements d'abattement très élevés sur l'ammonium dès pH = 10 : on obtient ainsi un rendement de plus de 99 % avec un ratio de circulation d'air de 2000 % et une température de 67 °C.

Le filtrat est très fortement tamponné et l'extraction du CO₂ ou « stripping » permet de réduire de manière significative la consommation de soude.

L'élimination physique du CO₂ dissous est un préalable indispensable si l'on veut économiser le réactif alcalin. Des rendements d'abattement supérieurs à 60 % peuvent être obtenus.

## Revendications

1. Dispositif d'extraction de nutriments phosphore et azote contenus dans un effluent liquide, ledit effluent étant de préférence issu de déshydratation d'un digestat d'un mélange organique, de préférence d'un mélange d'une fraction organique des déchets ménagers, des boues et éventuellement de fumiers et de graisses, le dispositif d'extraction comprenant :
- un premier réacteur (10) comprenant un moyen d'extraction de CO₂, de préférence une colonne à garnissage ou un réacteur à barbotage ;
- un deuxième réacteur (20) comprenant un réacteur à lit fluidisé (201), de préférence surmonté d'un décanteur (202) ;
- un troisième réacteur (30) comprenant un moyen d'extraction d'ammoniac, comprenant de préférence au moins une colonne à garnissage ou au moins un réacteur à barbotage et un laveur de gaz ;
les premier, deuxième et troisième réacteurs (10, 20, 30) étant agencés en série.

2. Dispositif selon la revendication 1, dans lequel le troisième réacteur (30) comprend en outre une cuve infiniment mélangée, de préférence positionnée en amont du moyen d'extraction d'ammoniac par rapport au sens de circulation prévu de l' effluent.

3. Dispositif selon la revendication 1 ou 2, dans lequel le réacteur à lit fluidisé (201) est surmonté d'un décanteur (202).

4. Dispositif selon la revendication précédente, dans lequel le deuxième réacteur (20) comprend en outre un circuit de recirculation (206), ledit circuit de recirculation (206) étant relié au décanteur (202) et à la partie inférieure du réacteur à lit fluidisé.

5. Procédé d'extraction de nutriments phosphore et azote contenus dans un effluent liquide, ledit effluent étant de préférence issu de déshydratation d'un digestat d'un mélange d'une fraction organique des déchets ménagers, des boues et éventuellement de fumiers et de graisses, le procédé comprenant les étapes suivantes :
a) introduction de l'effluent liquide dans un premier réacteur (10) comprenant un moyen d'extraction de CO₂, de préférence une colonne à garnissage ou un réacteur à barbotage,
b) extraction de CO₂ de l'effluent liquide dans le premier réacteur, de manière à obtenir un effluent A ;
c) introduction de l'effluent A obtenu à l'étape b) dans un deuxième réacteur (20) comprenant un réacteur à lit fluidisé optionnellement surmonté d'un décanteur ;
d) extraction de phosphore et d'azote de l'effluent A introduit dans le deuxième réacteur à l'étape c), de manière à obtenir un effluent B et de la struvite ;
e) introduction de l'effluent B obtenu à l'étape d) dans un troisième réacteur comprenant un moyen d'extraction d'ammoniac, comprenant de préférence au moins une colonne à garnissage (304) ou au moins un réacteur à barbotage et un laveur de gaz (306) ;
f) extraction de l'azote, sous forme de sel d'ammonium, de l'effluent B introduit dans le troisième réacteur à l'étape e), de manière à obtenir un effluent C et un sel d'ammonium.

6. Procédé selon la revendication 5, dans lequel, dans l'étape b), le moyen d'extraction est une colonne à garnissage (301, 304) et dans lequel l'effluent liquide circule à contre-courant d'un flux d'air dans la colonne à garnissage.

7. Procédé selon la revendication précédente, dans lequel le ratio volumique (v/v) air/effluent liquide de l'étape b) est compris dans un intervalle allant de 50 à 500.

8. Procédé selon l'une quelconque des revendications 5 à 7, dans lequel l'étape d) comprend l'addition d'une source de magnésium, ladite source de magnésium étant de préférence choisie dans le groupe comprenant Mg(OH)₂ et MgCl₂, de préférence Mg(OH)₂.

9. Procédé selon l'une quelconque des revendications 5 à 8, dans lequel l'étape d) comprend en outre une sous-étape de recirculation de struvite depuis le décanteur (202) vers la partie inférieure du réacteur à lit fluidisé (201).

10. Procédé selon l'une quelconque des revendications 5 à 9, dans lequel l'étape f) comprend les sous-étapes :
i) extraction de l'azote sous forme d'ammoniac gazeux, de manière à obtenir un gaz A comprenant de l'ammoniac ;
ii) absorption de l'ammoniac du gaz A obtenu à l'étape i) avec une solution diluée ou non diluée d'un acide fort, de manière à obtenir le sel d'ammonium.

11. Procédé selon la revendication précédente, dans lequel l'acide fort est choisi dans le groupe comprenant l'acide sulfurique et l'acide phosphorique.

12. Procédé selon l'une quelconques des revendications 10 à 11, dans lequel, l'étape i) d'extraction de l'azote sous forme d'ammoniac gazeux comprend les sous-étapes ordonnées de :
- mesure du pH de l'effluent B ;
- optionnellement, ajustement du pH de l'effluent B, à une valeur allant de 10 à 11, lorsque la valeur mesurée à l'étape précédente est inférieure à 10 ;
- ajustement de la température de l'effluent B à une température supérieure ou égale à 30°C, de préférence supérieure ou égale à 50°C ou supérieure ou égale à 65°C ;
- circulation de l'effluent B, à contre-courant d'un flux d'air, successivement dans au moins deux colonnes à garnissage (301) et (304), agencées en série, de manière à obtenir le gaz A.

13. Procédé selon la revendication 12, dans lequel le ratio volumique (v/v) air/effluent B est compris dans un intervalle allant de 500 à 5000, de préférence de 500 à 3000.
